# EUROPEAN PATENT APPLICATION

(11) **EP 1 734 749 A2**
(43) Date of publication of application: **20.12.2006**
(21) Application number: 06012292.6
(22) Date of filing: 14.06.2006
(51) Int. Cl.: H04N 5/44

(54) **Broadcast reception system, broadcast receiver, display apparatus and broadcast reception method**

(30) Priority: 16.06.2005 JP 2005176868; 01.05.2006 JP 2006127508
(71) Applicant: SONY CORPORATION, Tokyo (JP)
(72) Inventor: Asai, Masahiro, Shinagawa-ku Tokyo (JP)
(74) Representative: Müller - Hoffmann & Partner

(57) **Abstract**

There is provided a broadcast reception system in which a broadcast receiver receiving broadcasting signals and a display apparatus displaying images corresponding to the broadcasting signal are interconnected via a transmission line. The broadcast receiver includes: first station tuning means for selecting a channel designated by the display apparatus from received broadcasting signals; second station tuning means for sequentially and repetitively selecting a plurality of channels from the received broadcasting signals; image list generation means for generating and updating image information of an image list partitioned into channels, in accordance with image information of each channel selected by the second station tuning means; and communication means for communicating with the display apparatus, and transmitting the video information of a channel selected by the first station tuning means and/or image information of the image list generated by the image list generation means, to the display apparatus via the transmission line.

## Description

### BACKGROUND OF THE INVENTION

### 1. Field of the Invention

The present invention relates to a broadcast reception system, a broadcast receiver, a display apparatus and a broadcast reception method, in which a broadcasting signal of television broadcasting or the like is received with the broadcast receiver, and the broadcasting signal is transmitted to the display apparatus via a wireless or wired communication line, so that images corresponding to broadcasting signals can be displayed on the display apparatus.

### 2. Description of Related Art

A portable display apparatus separated from a broadcast receiver for receiving a broadcasting signal is prevailing nowadays because of wireless communication technologies. There is a system capable of viewing broadcasting received at home at a visit site, by connecting the display apparatus of this type to a communication line such as the Internet (e.g., refer to Japanese Patent Application Publication No. 2005-39781). For example, Japanese broadcasting can therefore be viewed in overseas.

### SUMMARY OF THE INVENTION

As broadcasting is viewed via a communication line such as the Internet with the above-described system, images displayed on a screen may be delayed because of encoding, decoding and the like of moving images, so that when a channel is changed over, images of the desired channel cannot be displayed immediately. Users feel stress in some cases in searching (zapping) a program desired to view by changing the channel while checking content of the program.

The present invention has been made to address the above-issue. There is a need for providing a broadcast reception system, a broadcast receiver, a broadcasting display apparatus and/or a broadcast reception method, which allows a user to quickly search a program wished to view.

In an embodiment of the present invention, there is provided a broadcast reception system in which a broadcast receiver for receiving a broadcasting signal and a display apparatus for displaying images corresponding to the broadcasting signal are interconnected via a transmission line. The broadcast receiver includes: first station tuning means for selecting a channel designated by the display apparatus from received broadcasting signals; second station tuning means for sequentially and repetitively selecting a plurality of channels from the received broadcasting signals; image list generation means for generating and updating image information of an image list partitioned into channels, in accordance with image information of each channel selected by the second station tuning means; and communication means for communicating with the display apparatus, and transmitting the video information of a channel selected by the first station tuning means and/or image information of the image list generated by the image list generation means, to the display apparatus via the transmission line. The display apparatus includes: communication means for communicating with the broadcast receiver and receiving the video information and/or the image information from the broadcast receiver via the transmission line; display means for displaying the video information selected by the first station tuning means and received by the communication means; and input means for accepting an input of a change-over instruction of a channel. If a channel is to be changed over, the display means displays the image list partitioned into channels generated by the image list generation means and received by the communication means, and transmits information indicating a change-over instruction to a channel selected from the image list by the input means to the broadcast receiver, to change over a channel to be received by the first station tuning means.

In another embodiment of the present invention, there is provided a broadcast reception system in which a broadcast receiver for receiving a broadcasting signal and a display apparatus for displaying images corresponding to the broadcasting signal are interconnected via a transmission line. The broadcast receiver includes: first station tuning means for selecting a channel designated by the display apparatus from received broadcasting signals; second station tuning means for sequentially and repetitively selecting a plurality of channels from the received broadcasting signals; and communication means for communicating with the display apparatus, and transmitting video information of a channel selected by the first station tuning means and/or image information of a channel selected by the second station tuning means, to the display apparatus via the transmission line. The display apparatus includes: communication means for communicating with the broadcast receiver and receiving the video information from the broadcast receiver via the transmission line; display means for displaying the video information selected by the first station tuning means and received by the communication means; image list generation means for generating and updating image information of an image list partitioned into channels, in accordance with the image information of each channel selected by the second station tuning means and received by the communication means; and input means for accepting an input of a change-over instruction of a channel. If a channel is to be changed over the display means displays the image list partitioned into channels generated by the image list generation means, and transmits information indicating a change-over instruction to a channel selected from the image list by the input means to the broadcast receiver, to change over a channel to be received by the first station tuning means.

In another embodiment of the present invention, there is provided a broadcast receiver connected to a display apparatus for displaying images corresponding to a broadcasting signal, the broadcast receiver receiving a broadcasting signal. The broadcast receiver includes: first station tuning means for selecting a channel designated by the display apparatus from received broadcasting signals; second station tuning means for sequentially and repetitively selecting a plurality of channels from the received broadcasting signals; image list generation means for generating and updating image information of an image list partitioned into channels, in accordance with image information of each channel selected by the second station tuning means; and communication means for communicating with the display apparatus, and transmitting the video information of a channel selected by the first station tuning means and/or image information of the image list generated by the image list generation means, to the display apparatus via the transmission line.

In another embodiment of the present invention, there is provided a broadcast receiver connected to a display apparatus for displaying images corresponding to a broadcasting signal, the broadcast receiver receiving a broadcasting signal. The broadcast receiver includes: first station tuning means for selecting a channel designated by the display apparatus from received broadcasting signals; second station tuning means for sequentially and repetitively selecting a plurality of channels from the received broadcasting signals; and communication means for communicating with the display apparatus, and transmitting video information of a channel selected by the first station tuning means and/or image information of a channel selected by the second station tuning means, to the display apparatus via the transmission line.

In another embodiment of the present invention, there is provided a display apparatus for displaying images corresponding to a broadcasting signal, the display apparatus being connected via a transmission line to a broadcast receiver. The broadcast receiver is configured for selecting video information of a designated channel from broadcasting signals received by first station tuning means, sequentially and repetitively selecting a plurality of channels from broadcasting signals received by second station tuning means, generating image information of an image list partitioned into channels from image information of each channel, and transmitting video information of a channel selected by the first station tuning means and/or the image information of the image list generated from the image information of each channel selected by the second station tuning means, via the transmission line. The display apparatus includes: communication means for communicating with the broadcast receiver and receiving the video information and the image information from the broadcast receiver via the transmission line; display means for displaying the video information selected by the first station tuning means and received by the communication means; and input means for accepting an input of a change-over instruction of a channel, wherein the display means displays when a channel is to be changed over the image list partitioned into channels received by the communication means, and transmits information indicating a change-over instruction to a channel selected from the image list by the input means to the broadcast receiver.

In another embodiment of the present invention, there is provided a display apparatus for displaying images corresponding to a broadcasting signal, the display apparatus being connected via a transmission line to a broadcast receiver for making first station tuning means select a designated channel from broadcasting signals, making second station tuning means sequentially and repetitively select a plurality of channels from broadcasting signals received by second station tuning means, and transmitting video information of a channel selected by the first station tuning means and/or image information of a channel selected by the second station tuning means via the transmission line. The display apparatus includes: communication means for communicating with the broadcast receiver and receiving the video information and the image information from the broadcast receiver via the transmission line; display means for displaying the video information selected by the first station tuning means and received by the communication means; image list generation means for generating and updating image information of an image list partitioned into channels, in accordance with the image information of each channel selected by the second station tuning means and received by the communication means; and input means for accepting an input of a change-over instruction of a channel. If a channel is to be changed over, the display means displays the image list partitioned into channels in accordance with the image information generated by the image list generation means, and transmits information indicating a change-over instruction to a channel selected from the image list by the input means to the broadcast receiver.

In another embodiment of the present invention, there is provided a broadcast reception method for a broadcast reception system in which a broadcast receiver for receiving a broadcasting signal and a display apparatus for displaying images corresponding to the broadcasting signal are interconnected via a transmission line. The method includes, in the broadcast receiver: selecting video information of a channel designated through communications with the display apparatus from broadcasting signals received by first station tuning means; selecting sequentially and repetitively a plurality of channels from broadcasting signals received by second station tuning means; generating an image list partitioned into channels, in accordance with image information of each channel; and transmitting the video information of a channel selected by the first station tuning means and/or image information of the image list generated from image information of each channel selected by the second station tuning means, to the display apparatus via the transmission line. In the display apparatus, the method includes: receiving the video information of a channel designated through communications with the broadcast receiver via the transmission line; displaying an image corresponding to the received video information of the designated channel; displaying, if a channel is to be changed over, the image list partitioned into channels generated from the image information corresponding to each channel and received via the transmission line; and transmitting information indicating a change-over instruction to a channel selected from the image list to the broadcast receiver via the transmission line, to change over a channel to be received by the first station tuning means.

In another embodiment of the present invention, there is provided a broadcast reception method for a broadcast reception system in which a broadcast receiver for receiving a broadcasting signal and a display apparatus for displaying images corresponding to the broadcasting signal are interconnected via a transmission line. The method includes, in the broadcast receiver, selecting a channel designated through communications with the display apparatus from received broadcasting signals by first station tuning means; selecting sequentially and repetitively a plurality of channels from received broadcasting signals by second station tuning means; and transmitting video information of a channel selected by the first station tuning means and/or image information of a channel selected by the second station tuning means, to the display apparatus via the transmission line. In the display apparatus, the method includes: communicating via the transmission line with the broadcast receiver, receiving the video information from the broadcast receiver via the transmission line; displaying an image corresponding to the received video information of a channel selected by the first station tuning means; generating and updating the image information of an image list partitioned into channels in accordance with the received image information of each channel selected by the second station tuning means; displaying, if a channel is to be changed over, the image list partitioned into channels generated from the image information of each channel; and transmitting information indicating a change-over instruction to a channel selected from the image list to the broadcast receiver via the transmission line, to change over a channel to be received by the first station tuning means.

According to the present invention, a user can quickly search a program wished to view because an image list partitioned into channels is displayed on a display in a case where a desired channel is to be selected.

### BRIEF DESCRIPTION OF THE DRAWINGS

Fig. 1 is a schematic diagram showing a broadcast reception system according to an embodiment of the present invention;
Fig. 2 is a block diagram showing a structure of a broadcast receiver of the broadcast reception system;
Fig. 3 is a block diagram showing a structure of a display apparatus of the broadcast reception system;
Fig. 4 is a flow chart illustrating a channel change-over operation to be performed by a broadcast receiver;
Fig. 5 is a flow chart illustrating a tiling image generation operation to be performed by the broadcast receiver;
Fig. 6 is a flow chart illustrating a tiling image transmission operation to be performed by the broadcast receiver;
Fig. 7 is a flow chart illustrating a channel selection operation to be performed by the display apparatus;
Figs. 8A to 8D are diagrams showing a display example of channel selection;
Fig. 9 is a schematic diagram showing a broadcast reception system according to another embodiment of the present invention;
Fig. 10 is a block diagram showing a structure of a broadcast receiver of the broadcast reception system;
Fig. 11 is a block diagram showing a structure of a display apparatus of the broadcast reception system;
Fig. 12 is a flow chart illustrating a process of forming and transmitting a tiling image at the broadcast receiver;
Fig. 13 is a flow chart illustrating a process of displaying a tiling image at the display apparatus; and
Fig. 14 is a flow chart illustrating a channel selection operation to be performed by the display apparatus.

### DETAILED DESCRIPTION OF EMBODIMENTS

Below, embodiments of the present invention will be described in detail with reference to the accompanying drawings.

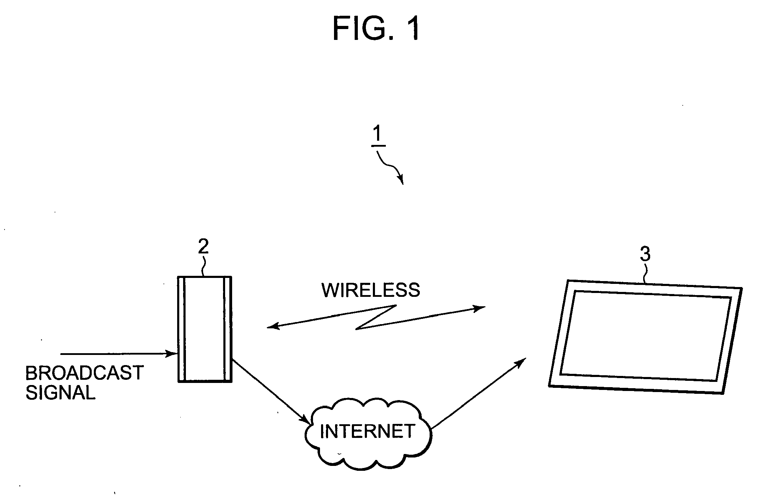

According to an embodiment of the present invention, there is provided a broadcast receiver 1 having the structure such as shown in Fig. 1.

The broadcast reception system 1 has a broadcast receiver 2 for receiving a broadcasting signal and a display apparatus 3 for displaying images of a channel selected by the broadcast receiver 2. The broadcast receiver 2 and display apparatus 3 are wirelessly interconnected using infrared rays, radio waves or the like, or wired or interconnected using the Internet or the like.

In the broadcast reception system 1, the display apparatus 3 is operated by a user, and requests video information of a channel wished to view, from the broadcast receiver 2. The broadcast receiver 2 generates video information of the channel corresponding to the request from received broadcasting signals, and transmits the generated video information to the display apparatus 3. The display apparatus 3 receives the video information transmitted from the broadcast receiver 2, and displays images corresponding to the video information on a display screen.

In the broadcast reception system 1 of this type, a user can view a broadcasting program received at the home even at a visit site, for example, by installing the broadcast receiver 2 in the home and communicating with the display apparatus 3 via the Internet by using a network protocol called TCP (Transmission Control Protocol)/IP (Internet Protocol). In the following, although the broadcast reception system using TCP/IP will be descried, the embodiment is not limited only thereto.

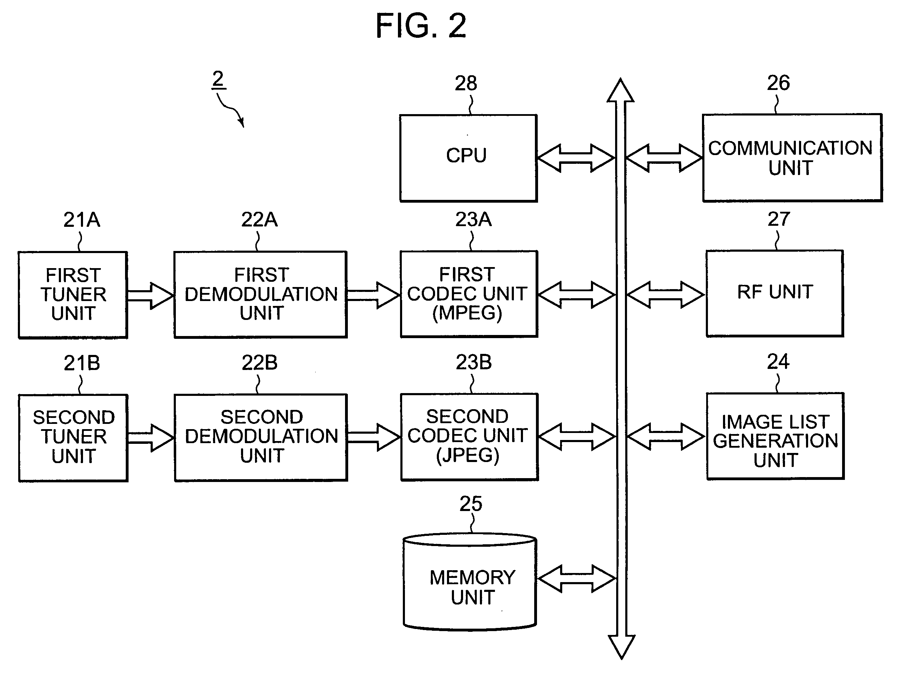

In the broadcast reception system 1, the broadcast receiver 2 includes: for example, as shown in the block diagram of Fig. 2, a first tuner unit 21A for selecting a channel requested by the display apparatus 3 from received broadcasting signals; a first demodulation unit 22A for demodulating the broadcasting signal of the channel selected by the tuner unit 21A and outputting video information; a first codec unit 23A for compressing the video information output from the first demodulation unit 22A; a second tuner unit 21B for sequentially and repetitively selecting at a predetermined interval a plurality of channels from received broadcasting signals; a second demodulation unit 22B for demodulating the broadcasting signals of the channels selected by the tuner unit 21B and outputting video information; a second codec unit 23B for compressing the video information output from the second demodulation unit 22B; an image list generation unit 24 for generating and updating image information of an image list partitioned into channels; a memory unit 25; a communication unit 26 for communicating with the device apparatus 3; an RF (Radio Frequency) unit 27 for communicating with the display apparatus 3 wireless; and a CPU (Central Processing Unit) 28 for collectively controlling the units.

The first tuner unit 21 A amplifies a broadcasting signal received from an antenna to a proper level, and selects a channel designated by a user via the display apparatus 3, from broadcasting signals. The first demodulation unit 22A demodulates the broadcasting signal of the channel selected by the first tuner unit 21A and outputs video information. The first codec unit 23A compresses the video information output from the first demodulation unit 22A, for example, by an MPEG (Moving Picture Experts Group) scheme.

The second tuner unit 21B sequentially changes over a plurality of channels from received broadcasting signals. The second demodulation unit 22B demodulates the broadcasting signal of the channel sequentially changed over by the second tuner unit 21 B and outputs video information. The second codec unit 23B generates image information of each channel, from the video information of each channel sequentially output from the second codec unit 23B, and compresses the image information, for example, by a JPEG (Joint Photographic Experts Group) scheme.

The image list generation unit 24 generates image list information (tiling image information) to be used for displaying image information of each channel output from and compressed by the JPEG scheme at the second codec unit 23B, on a display unit 36 of the display apparatus 3, while updating the image list information by replacing the image list information with the latest image of each channel. The image list information generation unit 24 also generates image list related information constituted of image related information such as a channel number, a broadcasting station name and program information.

The memory unit 25 is made of a nonvolatile memory such as an EEPROM (Electrically Erasable Programmable Read-Only Memory), and for example, stores the image list information and image list related information.

The communication unit 26 generates data in conformity with, e.g., TCP/IP, reads data of the video information of the MPEG scheme compressed by the first codec unit 23A and data of the image list information and image list related information of the JPEG scheme compressed by the second codec unit 23B, from the memory unit 25, and transmits the read data to the display apparatus 3. The RF unit 27 reads data of the video information of the MPEG scheme and data of the image list information and image list related information of the JPEG scheme, from the memory unit 25, and transmits the read data to the display apparatus 3 by wireless. The communication unit 26 or RF unit 27 receives a channel change-over instruction or the like from the display apparatus 3.

In accordance with the instruction received from the display apparatus 3 via the communication unit 26 or RF unit 27, CPU 28 controls each unit. For example, if the instruction is a channel change-over instruction, CPU 28 makes the first tuner unit 22A to select the designated channel.

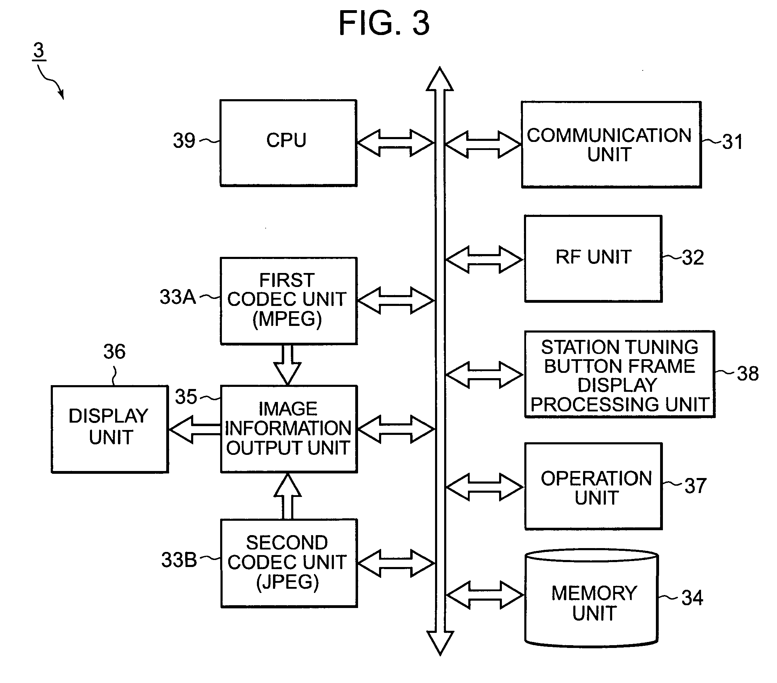

In the broadcast reception system 1, the display apparatus 3 includes: ,for example as shown in the block diagram of Fig. 3, a communication unit 31 for communicating with the broadcast receiver 2; an RF unit 32 for communicating with the broadcast receiver 2 by wireless; a first codec unit 33A for expanding video information received from the broadcast receiver 2; a second codec unit 33B for expanding image list information received from the broadcast receiver 2; a memory unit 34; a video information output unit 35, a display unit 36; an operation unit 37 for a station tuning operation and the like; a station tuning button frame display processing unit 38; and a CPU 39 for collectively controlling the units.

The communication unit 31 receives, for example, data in conformity with TCP/IP transmitted from the broadcast receiver. The RF unit 32 receives this data by wireless. The communication unit 31 and RF unit 32 transmit, for example, a channel change-over instruction received from a user operating the operation unit 37 or the like, to the broadcast receiver 2.

The first codec unit 33A expands data of video information of the MPEG scheme received from the communication unit 31. The second codec unit 33B expands data of image list information of the JPEG scheme received from the communication unit 31.

The memory unit 34 includes a nonvolatile memory such as EEPROM, and temporarily stores data of image list information and image list related information expanded by the second codec unit 33B.

The video information output unit 35 converts the video information expanded by the first codec unit 33A and the image list information into video signals, and outputs the video signals to the display unit 36.

The display unit 36 is, for example, an LCD (Liquid Crystal Display), and displays video signals from the image information output unit 35.

The operation unit 37 functions as an input means for instructing a channel change-over or the like.

The station tuning button frame display processing unit 38 generates display information corresponding to a station tuning button frame 41 corresponding to a display area of each channel of an image list displayed on the display unit 36, and outputs the display information to the image information output unit 35, so that the station tuning button frame 41 is displayed on the image list displayed on the display unit 36. A user moves the station tuning button frame 41 by operating the operation unit 37 to select a desired channel.

The station tuning button frame display processing unit 38 may display a channel number in addition to the station tuning button frame 41. Image related information such as a broadcasting station name and program information corresponding to the display contents in the display area set with the station tuning button frame 41 may also be displayed by operating the operation unit 37.

CPU 39 controls collectively the units, and for example, transmits a channel change-over instruction to the broadcast receiver 2 via the communication unit 31 or RF unit 32.

In this embodiment of the broadcast reception system 1 in which the broadcast receiver 2 for receiving a broadcasting signal and the display apparatus 3 for displaying video information corresponding to the broadcasting signal are interconnected via a transmission line. The broadcast receiver 2 selects a broadcasting signal of a channel designated through communications with the display apparatus 3 from broadcasting signals received by the first tuner unit 21A, selects sequentially and repetitively a plurality of channels from broadcasting signals received by the second tuner unit 21B, makes the image list generation unit 24 generate the image list partitioned into channels, in accordance with image information of each channel, and transmits the video information of a channel selected by the first tuner section and/or image information of the image list generated from image information of each channel selected by the second tuner unit 21B, to the display apparatus 3 via the transmission line.

The display apparatus 3 receives the video information of a channel designated through communications with the broadcast receiver 2 via the transmission line, makes the display unit 36 display an image corresponding to the received video information of the designated channel. When a channel is to be changed over, the display unit 36 display the image list partitioned into channels corresponding to the video information generated from the video information corresponding to each channel and received via the transmission line, and changes over a channel to be received by the first tuner unit 21 A.

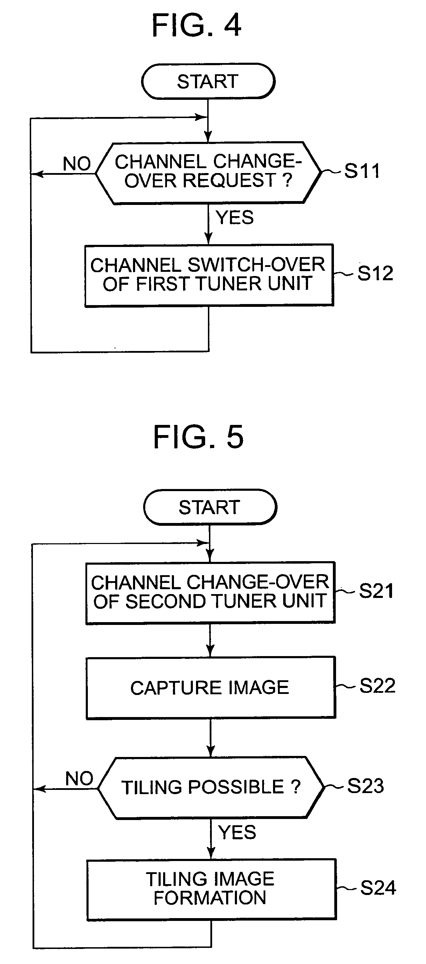

Description will be made on the operation of the broadcast receiver 2 of the embodiment with reference to the flow charts shown in Figs. 4 to 6.

Fig. 4 is a flow chart illustrating a channel change-over operation.

CPU 28 of the broadcast receiver 2 waits always for a channel change-over request from the display apparatus 3 (Step S11).

If a channel change-over request is received at Step S11 from the display apparatus 3 via the communication unit 26 or RF unit, the flow advances to Step S 12 whereat CPU 28 instructs the first tuner unit 21A to change over to the requested channel. The first tuner unit 21 A selects the requested channel. The flow returns thereafter to Step S11 to wait for a next channel change-over request.

The first tuner unit 21A changes the channel to be selected, in accordance with the channel change-over request. A broadcasting signal of the selected channel is demodulated at the first demodulation unit 22A, compressed into data of, e.g., the MPEG scheme at the first codec unit 23A, and transmitted to the display apparatus 3 via the communication unit 26 or RF unit 27.

Fig. 5 is a flow chart illustrating a process for video information of the channel selected by the second tuner unit 21B.

The second tuner unit 21B sequentially changes over a channel at a predetermined interval (Step S21). It is preferable that the channel to be changed over by the second tuner unit 21B is different from the channel selected by the first tuner unit 21A.

At Step S22, image information is generated from the broadcasting signal of the channel changed over by the second tuner unit 21B, and the image information and related image information is stored in the memory unit 25. Namely, the broadcasting signal selected by the second tuner unit 21 B is demodulated by the second demodulation unit 22B and compressed into data of, e.g., the JPEG scheme, and the image information of the JPEG scheme and related image information is stored in the memory unit 25. For example, the related image information includes information on a channel, a time and the like.

It is judged at Step S23 whether image information stored in the memory unit 25 at Step S22 can be used as tiling image information. This judgment may be performed, for example, by detecting disturbance of an image. The tiling image is an image list with images of channels being disposed side by side. If it is judged at Step S23 that the generated image information can be used as the tiling image information, the flow advances to Step S24, whereas if it is judged that the generated image information cannot be used as the tiling image information, the flow returns to Step S21.

At Step S24, the image list generation unit 24 thinnes the image information judged at Step S23 that the image information can be used as the tiling image information, and updates the image information by replacing the image at a position in the tiling image predetermined by the thinned related image information, to thereby generate a new tiling image. The updated and generated tiling image is stored in the memory unit 25 together with the related image information of each channel. Thereafter, the flow returns to Step S21 to repeat the above-described processes. In this manner, a channel selected by the second tuner unit 21B is sequentially changed over, and the image list generation unit 24 always renews the image of each channel in the tiling image.

At Steps S22 and S23, a plurality of images of channels selected by the second tuner unit 21B may be generated, and an image capable of being used for the tiling image is selected from the generated images.

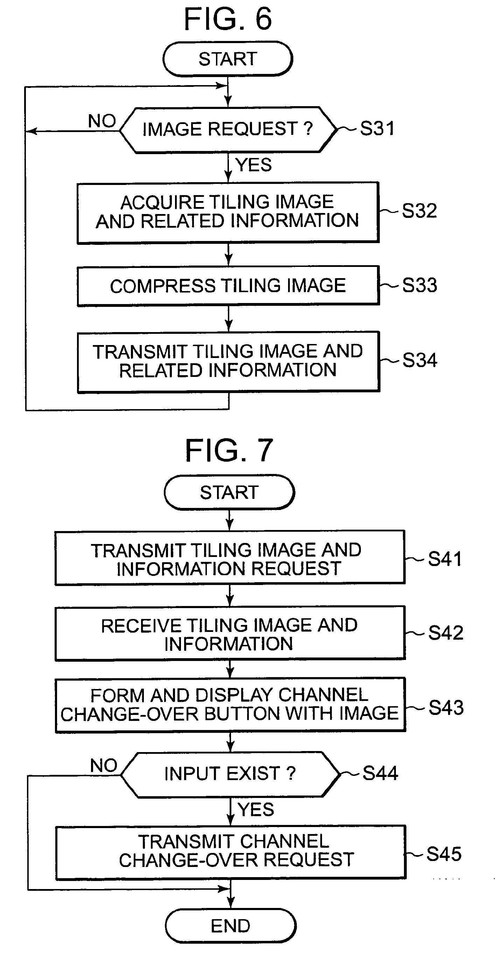

Next, with reference to a flow chart shown in Fig. 6, description will be made on an operation of transmitting the tiling image generated by the above-described processes to the display apparatus 3. CPU 28 of the broadcast receiver 2 waits always for a tiling image request from the display apparatus 3 (Step S31).

If the tiling image request is received from the display apparatus 3 at Step S31, CPU 28 acquires the tiling image and its related information from the memory unit 25 (Step S32). The tiling image is compressed into data of, e.g., of the JPEG scheme at the second codec unit 23B (Step S33), and the tiling image and its related information are transmitted to the display apparatus 3 via the communication unit 26 or RF unit 27 (Step S34).

As described above, in the broadcast receiver 2 of the embodiment, in response to the channel change-over request transmitted from the display apparatus 3, a channel to be selected by the first tuner unit 21A is changed over, and in response to the tiling image request transmitted from the display apparatus 3, data of the tiling image with images of channels selected by the second tuner unit 21B is transmitted to the display apparatus 3.

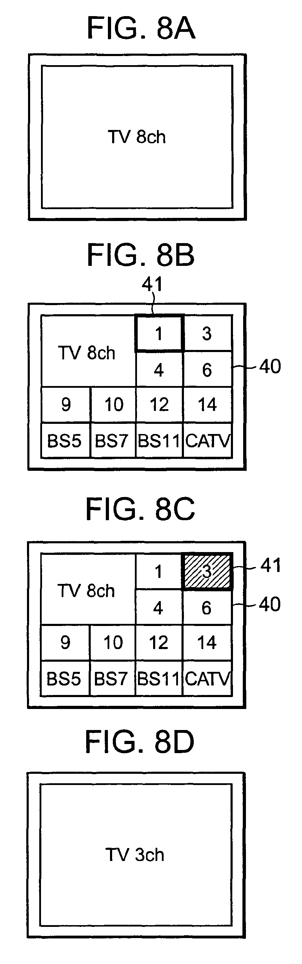

Next, with reference to Figs. 7 and 8A to 8D, a channel selection operation at the display apparatus 3 will be described. Fig. 7 is a flow chart illustrating a channel selection operation, and Figs. 8A to 8D are diagrams showing examples of screens displayed during the channel selection operation.

As a user depressed a channel selection button of the operation unit 37, CPU 39 transmits a tiling image/related information request to the broadcast receiver 2 via the communication unit 31 or RF unit 32 (Step S41). In this case, as shown in Fig. 8A, an image of, e.g., 8 ch is displayed in a whole screen area. In Figs. 8A to 8D, only channel numbers are shown without drawing video and image information.

At Step S42, the communication unit 31 or RF unit 32 receives data of tiling image/related information requested at Step S41. In accordance with the received data of the tiling image/related information, CPU 39 displays on the screen of the display unit 36 an image of the channel selected by the first tuner unit 21 A and a tiling image generated by the image list generation unit 42 from the broadcasting signal of each channel selected by the second tuner unit 21B (Step S43). For example, as shown in Fig. 8B, the tiling image is disposed in three third areas, and the image of 8 ch viewed heretofore is displayed in the remaining one fourth area.

The user can select a channel by moving the station tuning button frame 41 by operating the operation unit 37. For example, as shown in Fig. 8C, the user can select a desired channel in accordance with the image on the screen by selecting the image of the desired channel to be changed over, on a display screen of the tiling image, without depending upon the displayed language.

The user can select a channel by moving the station tuning button frame 41 in the tiling image displayed on the display screen 40 of the display apparatus 3 such as shown in Fig. 8B, to a desired channel by operating the operation unit 37 such as shown in Fig. 8C. In this manner, the user can select a desired channel in accordance with the image on the screen by selecting the image of the desired channel to be changed over, on a display screen of the tiling image, without depending upon the displayed language. Further, the image related information such as a station name and program information corresponding to the display contents in the display area at the station tuning button frame 41 by operating the operation unit 37.

At Step S44, CPU 39 detects an input of the channel selection by the user. If an input of the channel selection by the user is detected, the selected channel is determined in accordance with the image related information transmitted together with the tiling image, and a change-over request to the channel is transmitted to the broadcast receiver 2 (Step S45).

In response to the channel change-over request, the first tuner unit 21 A of the broadcast receiver 2 changes over the channel, and transmits video information of the channel to the display apparatus 3. For example, if 3 ch is selected from the channel list screen of the tiling image shown in Fig. 8C is selected, an image of 3 ch is displayed in the whole screen area as shown in Fig. 8D.

As described above, a user can select a channel while viewing the contents of the channel because the display apparatus 3 displays as a list the contents of all channels received from the broadcast receiver 2. This is particularly effective for the broadcast reception system in which an image delay occurs because of the communication line and the like as described earlier.

In the embodiment, although the tiling image is generated by the broadcast receiver 2, the tiling image may be generated by the display apparatus 3.

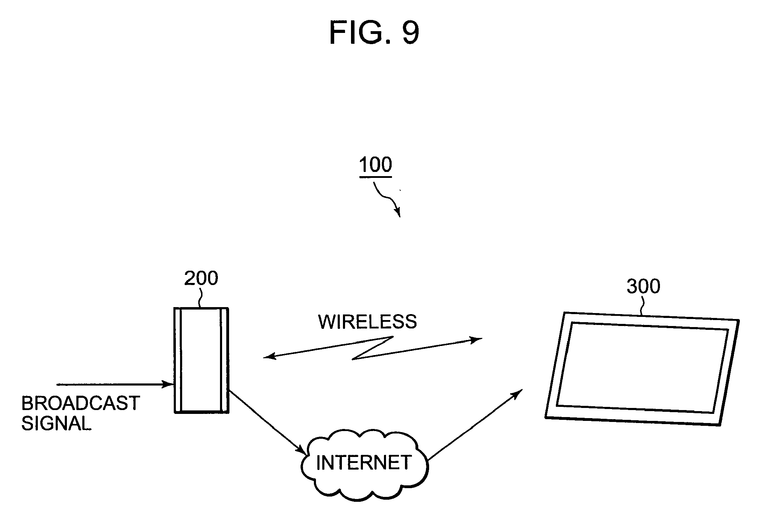

Namely, for example, as shown in Fig. 9, the present invention is applicable to a broadcast receiver 100 having a broadcast receiver 200 for receiving a broadcasting signal and a display apparatus 300 for displaying images of a channel selected by the broadcast receiver 200. The broadcast receiver 200 and display apparatus 300 are interconnected in a wireless way using infrared rays, radio waves or the like, or in a wired way using the Internet or the like.

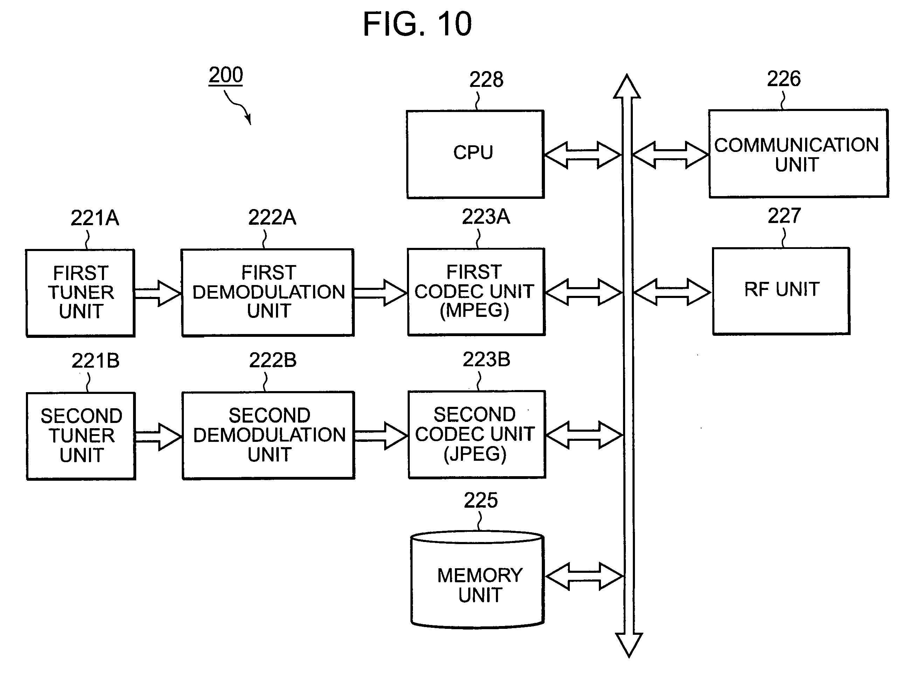

In the broadcast reception system 100, the broadcast receiver 200 includes: for example, as shown in Fig. 10, a first tuner unit 221A for amplifying broadcasting signals received at an antenna and selecting a channel designated by a user via the display apparatus 300 from the broadcasting signals; a first demodulation unit 222A for demodulating the broadcasting signal of the channel selected by the first tuner unit 221 A and outputting video information; a first codec unit 223A for compressing the video information output from the first demodulation unit 222A, for example, by an MPEG (Moving Picture Experts Group) scheme; a second tuner unit 221 B for sequentially and repetitively selecting at a predetermined interval a plurality of channels from received broadcasting signals; a second demodulation unit 222B for demodulating the broadcasting signals of the channels selected by the second tuner unit 221B and outputting video information; a second codec unit 223B for compressing the image information of each channel sequentially output from the second demodulation unit 222B, for example, by a JPEG (Joint Photographic experts Group) scheme; a memory unit 225 which is made of a nonvolatile memory such as EEPROM (Electrically Erasable Programmable Read-only Memory) and stores data and the like of the JPEG scheme compressed by the second codec unit 223B; a communication unit 226 for communicating with the device apparatus 300; an RF (Radio Frequency) unit 227 for communicating with the display apparatus 300 wireless; and a CPU (Central Processing Unit) 228 for collectively controlling the units.

The second tuner unit 221B sequentially changes over a plurality of channels at the predetermined interval. It is preferable that the channel to be changed over by the second tuner unit 221B is different from the channel selected by the first tuner unit 22 1 A.

Image information is generated from the broadcasting of a channel changed over by the second tuner unit 221B, and the image information and related image information is stored in the memory unit 225. Namely, the broadcasting signal selected by the second tuner unit 221B is demodulated by the second demodulation unit 222B and compressed into data of, e.g., the JPEG scheme at the second codec unit 223B. The image information of the JPEG scheme and related image information is stored in the memory unit 225. The related image information includes information such as a channel and a time.

CPU 228 reads the image information and related image information of the JPEG scheme from the memory unit 225 and transmits the read information to the display apparatus 300 via the communication unit 226 or RF unit 227. CPU 228 controls each unit in accordance with an instruction from the display apparatus 300 received via the communication unit 226 or RF unit 227. For example, if the instruction is a channel change-over instruction, CPU makes the first tuner unit 221A select the designated channel in accordance with the instruction.

The communication unit 226 generates data in conformity with, e.g., TCP/IP, reads data of the video information of the MPEG scheme compressed by the first codec unit 223A and data of the image information of the JPEG scheme compressed by the second codec unit 223B, from the memory unit 225, and transmits data of the video information of the MPEG scheme and data of the image information of the JPEG scheme from the memory unit 225, and transmits the read data to the display apparatus 3 by wireless. The communication unit 226 or RF unit 227 receives a channel change-over instruction or the like from the display apparatus 300.

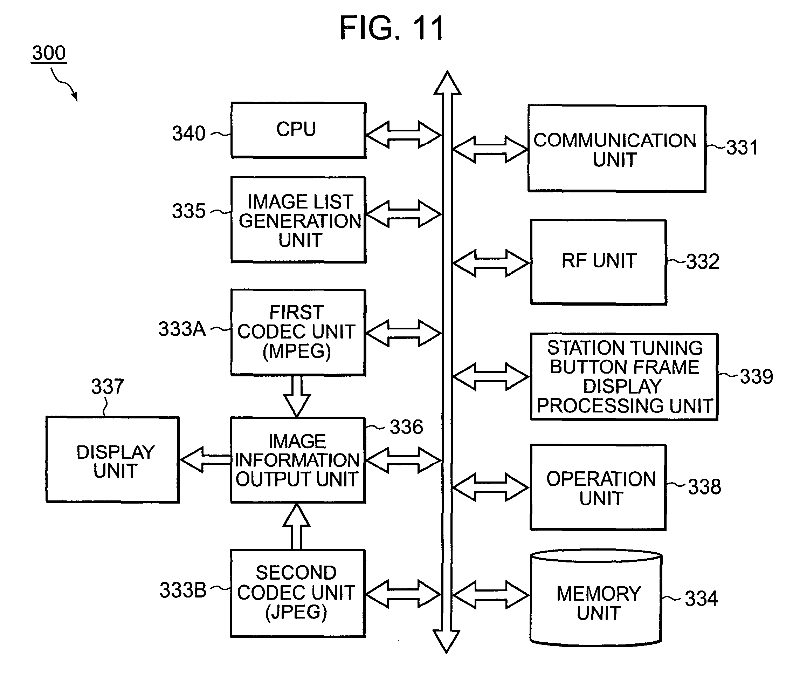

In the broadcast reception system 100, the display apparatus 300 includes: ,for example as shown in Fig. 11, a communication unit 331 for communicating with the broadcast receiver 200; an RF unit 332 for communicating with the broadcast receiver 200 by wireless; a first codec unit 333A for expanding data of video information of the MPEG scheme received from the broadcast receiver 200 via the communication unit 331 or RF unit 332; a second codec unit 333B for expanding image information of the JPEG scheme of each channel received from the broadcast receiver 200 via the communication unit 331 or RF unit 332; a memory unit 334 which is made of a nonvolatile memory such as EEPROM and temporarily stored data of image information expanded by the second codec unit 333B; an image list generation unit 335 for generating and updating image information of an image list partitioned into channels; a video information output unit 336, a display unit 337 which is made of, e.g., an LCD (Liquid Crystal Display) and displays video signals from the video information output unit 336; an operation unit 338 for a station tuning operation and the like; a station tuning button frame display processing unit 339 and a CPU 340 for collectively controlling the units.

The communication unit 331 receives, for example, data in conformity with TCP/IP transmitted from the broadcast receiver 200. The RF unit 332 receives this data by wireless. The communication unit 331 and RF unit 332 transmit, for example, a channel change-over instruction received from a user operating the operation unit 338 or the like, to the broadcast receiver 200.

The display apparatus 300 communicates with the broadcast receiver 200 via the communication unit 331 or RF unit 332, and receives the video information of the MPEG scheme from the broadcast receiver 300 via the communication unit 331 or RF unit 332. Data of the received video information of the MPEG scheme, i.e.,data of video information of a channel selected by the first tuner unit 221A is expanded at the first codec unit 333A. An image corresponding to the expanded video information is displayed on the display unit 337.

Image information of the JPEG scheme is received from the broadcast receiver 300 via the communication unit 331 or RF unit 332. Data of the received image information of the JPEG scheme, i.e., data of the image information of each channel sequentially selected by the second tuner unit 221B, is expanded at the second codec unit 333B, and the data of the expanded image information of each channel is temporarily stored in the memory unit 334.

The image list generation unit 335 judges whether the image information of each channel stored in the memory unit 334 can be used as tiling image information. A tiling image is generated by updating the image information by thinning the image information judged to be capable of being used as the tiling image information, and by replacing the image in the tiling image disposed at a predetermined position determined by the related image information, with the thinned image information. The updated and generated tiling image together with the related image information of each channel is stored in the memory unit 334 and sequentially updated.

The video information output unit 336 converts the video information expanded at the first codec unit 333A and image information of the image list generated by the image list generation unit 335, into video signals to be displayed on the display unit 337, and outputs the video signals to the display unit 337.

The operation unit 338 functions as an input means for a channel change-over instruction or the like.

The station tuning frame display processing unit 339 generates display information for a station tuning button frame 41 corresponding to each channel display area of the image list displayed on the display unit 337, and outputs the display information to the video information output unit 336 to thereby display the station tuning button frame 41 on the image list displayed on the display unit 337. A user can select a desired channel by moving the station tuning button frame 41 by operating the operation unit 338.

The station tuning button frame display processing unit 339 may display a channel number in addition to the station tuning button frame 41. Image related information such as a broadcasting station name and program information corresponding to the display contents in the display area set with the station tuning button frame 41 may also be displayed by operating the operation unit 338.

The CPU 340 controls collectively the units, and for example, transmits a channel change-over instruction to the broadcast receiver 200 via the communication unit 331 or RF unit 332.

In the embodiment of the broadcast reception system 100 in which a broadcast receiver 200 for receiving a broadcasting signal and a display apparatus 300 for displaying video information corresponding to the broadcasting signal are interconnected via a transmission line, the broadcast receiver 200 makes the first tuner unit 221A select a channel designated through communications with the display apparatus from received broadcasting signals, makes the second tuner unit 221B select sequentially and repetitively a plurality of channels from received broadcasting signals, and transmits video information of a channel selected by the first tuner unit 221A and/or image information of a channel selected by the second tuner unit 221B, to the display apparatus 300 via the communication unit 226 or RF unit 227.

The display apparatus 300 communicates via the communication unit 331 or RF unit 332 with the broadcast receiver 200, receives the video information from the broadcast receiver 200, makes the display unit 337 display an image corresponding to the received video information of a channel selected by the first tuner unit 221A, generates and updates the image information of an image list partitioned into channels in accordance with the received image information of each channel selected by the second tuner unit 221B, and makes when a channel is to be changed over the display unit 337 display the image list partitioned into channels generated from the image information of each channel, to change over a channel to be received by the first tuner unit 221A.

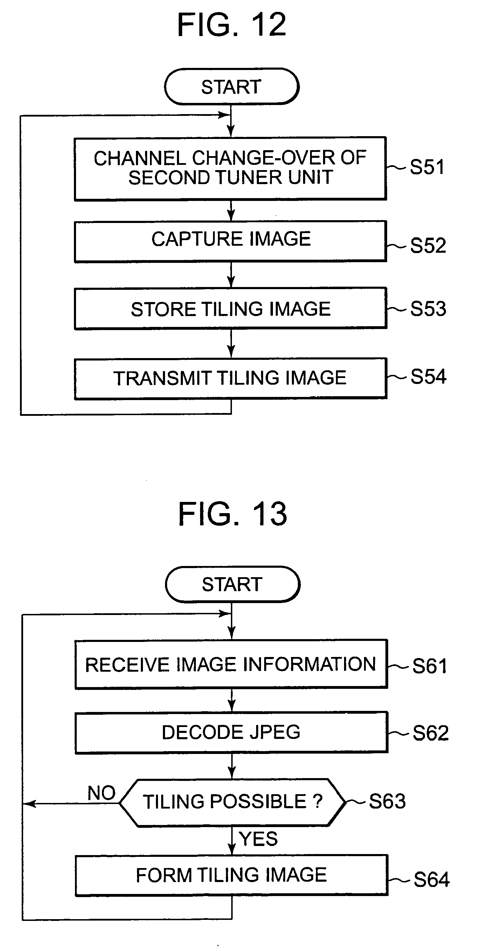

Namely, as shown in a flow chart of Fig. 12, in the broadcast receiver 200 of the broadcast reception system 100, the second tuner unit 221B sequentially changes over a channel at a predetermined interval (Step S51). Image information is generated from the broadcasting signal of the channel changed over by the second tuner unit 221B at Step S51 (Step S52), and the image information and related image information is stored in the memory unit 225 (Step S53). Namely, the broadcasting signal selected by the second tuner unit 221B is demodulated by the second demodulation unit 222B and compressed into data of, e.g., the JPEG scheme at the second codec unit 223B, and the image information of the JPEG scheme at the tiling image information and related image information is stored in the memory unit 225. For example, the related image information includes information on a channel, a time and the like. The image information and image related information of the JPEG scheme stored in the memory unit 225 is transmitted to the display apparatus 300 via the communication unit 226 or RF unit 227 (Step S54). The flow thereafter returns to Step S51 whereat image information is generated from the broadcasting signal of the next channel, to thereafter repeat the processes at Steps S51 to S54. In this manner, tiling image information of each channel generated from the broadcasting signal of each channel changed over by the second tuner unit 221B is sequentially transmitted to the display apparatus 300 via the communication unit 226 or RF unit 227.

As shown in a flow chart of Fig. 13, the display apparatus 300 receives the tiling image information of the JPEG scheme of each channel sequentially transmitted from the broadcast receiver 200 via the communication unit 331 or RF unit 332 (Step S61). The received image information of the JPEG scheme is decoded at the second codec unit 333B, and the decoded image information and image related information is stored in the memory unit 334 (Step S62).

The image list generation unit 335 judges whether the image information stored in the memory unit 334 at Step S62 can be used as tiling image information (Step S63). If it is judged at Step S63 that the image information stored in the memory unit 334 can be used as tiling image information, the image information judged as capable of being used as the tiling image information is thinned to obtain reduced image information, and the image in the tiling image at a position in the memory unit 334 predetermined from the image related information is replaced with the reduced image information (Step S64). Thereafter, the flow returns to Step S61 to repeat the above-described processes to thereby generate and update the tiling image. The tiling image generated and updated in this manner and the image related information of each channel is stored in the memory unit 334. If it is judged that the image information stored in the memory unit 334 cannot be used as the tiling image information, the flow returns to Step S61 whereat the image list generation unit 335 executes the processes for the image data of the next channel.

Since the tiling image information of the JPEG scheme of each channel obtained by sequentially changing over the reception channel of the second tuner unit 221B at a predetermined interval is transmitted, the image of each channel in the tiling image in the memory unit 334 is always updated by the image list generation unit 335.

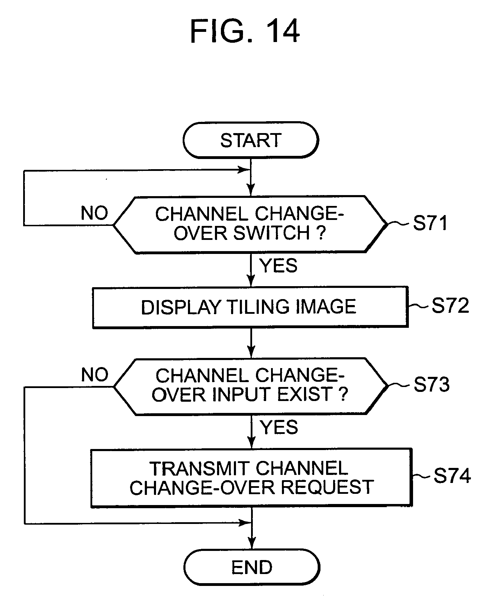

As shown in a flow chart of Fig. 14, CPU 340 of the display apparatus 300 judges whether a user operates, for example, a channel selection button of the operation unit 338 (Step S71), and if the channel selection button is operated, the tiling information is read from the memory unit 334 and displayed on the screen of the display unit 334 via the video information output unit 336, together with the image of the channel selected by the first tuner unit 221A (Step S72). The tiling image is displayed on the screen of the display unit 337 in three fourth areas, with the image of 8 ch being displayed in one fourth image area, for example, such as shown in Fig. 8B.

A user can select a desired channel by moving the station tuning button frame 41 on the display screen 40 of the tiling image of the display apparatus 300 by operating the operation unit 338. For example, as shown in Fig. 8C, the user can select a desired channel in accordance with an image on the screen by selecting the image of the channel to be changed over, from the tiling image on the display screen 40, without depending upon the displayed language.

CPU 340 judges whether a user selects a channel, for example, by operating the operation unit 338 (Step S73). If the user inputs a channel selection, the selected channel is determined in accordance with the image related information transmitted along with the tiling information, and a change-over request to this channel is transmitted to the broadcast receiver 200 (Step S74).

CPU 228 of the broadcast receiver 200 waits always for the channel change-over request from the display apparatus 300, and when the channel change-over request is received from the display apparatus 300 via the communication unit 226 or RF unit 227, instructs the first tuner unit 221A to change over to the requested channel. The first tuner unit 221A selects the requested channel. In this manner, the first tuner unit 221A changes the channel to be selected, in accordance with the channel change-over request. The broadcasting signal of the selected channel is demodulated by the first demodulation unit 222A, compressed in data of, e.g., the MPEG scheme at the first codec unit 223A, and transmitted to the display apparatus 300 via the communication unit 226 or RF unit 227.

As described above, in the broadcast reception system in which the display apparatus 300 generates the tiling image, image information of the channel selected by the second tuner unit 221B of the broadcast receiver 200 is transmitted to the display apparatus 300. In this case, only the image information judged as capable of being used as the tiling image information may be transmitted. In this case, since the display apparatus 300 is not necessary to request the tiling image from the broadcast receiver 200 and receive data of the tiling image from the broadcast receiver 200, a selected channel can be displayed immediately in accordance with the channel image list stored in the memory unit 334 of the display apparatus 300. Since the tiling image is updated each time the second tuner unit 221B select a new channel, it is possible to always confirm the near broadcasting state when a channel is to be selected.

It may be possible to display not only the image list of channels to be selected by the broadcast receiver 200 but also the contents to be supplied from an external apparatus connected to the broadcast receiver 200. In this case, contents reproduced, for example, by a DVD recorder can be enjoyed on the display apparatus 300.

The present invention contains subject matter related to Japanese Patent Applications JP 2005-127508 and JP 2005-176868 filed in the Japanese Patent Office on May 1, 2006 and June 16, 2005, respectively, the entire contents of which being incorporated herein by reference.

It should be understood by those skilled in the art that various modifications, combinations, sub-combinations and alterations may occur depending on design requirements and other factors insofar as they are within the scope of the appended claims or the equivalents thereof.

## Claims

1. A broadcast reception system in which a broadcast receiver for receiving a broadcasting signal and a display apparatus for displaying images corresponding to the broadcasting signal are interconnected via a transmission line, wherein:
the broadcast receiver comprises:
first station tuning means for selecting a channel designated by the display apparatus from received broadcasting signals;
second station tuning means for sequentially and repetitively selecting a plurality of channels from the received broadcasting signals;
image list generation means for generating and updating image information of an image list partitioned into channels, in accordance with image information of each channel selected by the second station tuning means; and
communication means for communicating with the display apparatus, and transmitting the video information of a channel selected by the first station tuning means and/or image information of the image list generated by the image list generation means, to the display apparatus via the transmission line;
the display apparatus comprises:
communication means for communicating with the broadcast receiver and receiving the video information and/or the image information from the broadcast receiver via the transmission line;
display means for displaying the video information selected by the first station tuning means and received by the communication means; and
input means for accepting an input of a change-over instruction of a channel,
wherein, if a channel is to be changed over, the display means displays the image list partitioned into channels generated by the image list generation means and received by the communication means, and transmits information indicating a change-over instruction to a channel selected from the image list by the input means to the broadcast receiver, to change over a channel to be received by the first station tuning means.

2. The broadcast reception system according to claim 1, wherein:
the image list is updated each time the second station tuning means select a new channel.

3. The broadcast reception system according to claim 1, wherein:
the display means displays the image list partitioned into channels corresponding to image information generated by the image list generation means, together with channel information.

4. A broadcast reception system in which a broadcast receiver for receiving a broadcasting signal and a display apparatus for displaying images corresponding to the broadcasting signal are interconnected via a transmission line, wherein:
the broadcast receiver comprises:
first station tuning means for selecting a channel designated by the display apparatus from received broadcasting signals;
second station tuning means for sequentially and repetitively selecting a plurality of channels from the received broadcasting signals; and
communication means for communicating with the display apparatus, and transmitting video information of a channel selected by the first station tuning means and/or image information of a channel selected by the second station tuning means, to the display apparatus via the transmission line;
the display apparatus comprises:
communication means for communicating with the broadcast receiver and receiving the video information from the broadcast receiver via the transmission line;
display means for displaying the video information selected by the first station tuning means and received by the communication means;
image list generation means for generating and updating image information of an image list partitioned into channels, in accordance with the image information of each channel selected by the second station tuning means and received by the communication means; and
input means for accepting an input of a change-over instruction of a channel,
wherein if a channel is to be changed over the display means displays the image list partitioned into channels generated by the image list generation means, and transmits information indicating a change-over instruction to a channel selected from the image list by the input means to the broadcast receiver, to change over a channel to be received by the first station tuning means.

5. The broadcast reception system according to claim 4, wherein:
the image information of the image list is updated each time the second station tuning means select a new channel.

6. The broadcast reception system according to claim 4, wherein:
the display means displays the image list partitioned into channels corresponding to image information generated by the image list generation means, together with channel information.

7. A broadcast receiver connected to a display apparatus for displaying images corresponding to a broadcasting signal, the broadcast receiver receiving a broadcasting signal, the broadcast receiver comprising:
first station tuning means for selecting a channel designated by the display apparatus from received broadcasting signals;
second station tuning means for sequentially and repetitively selecting a plurality of channels from the received broadcasting signals;
image list generation means for generating and updating image information of an image list partitioned into channels, in accordance with image information of each channel selected by the second station tuning means; and
communication means for communicating with the display apparatus, and transmitting the video information of a channel selected by the first station tuning means and/or image information of the image list generated by the image list generation means, to the display apparatus via the transmission line.

8. The broadcast receiver according to claim 7, wherein:
the image information of the image list is updated each time the second station tuning means select a new channel.

9. A broadcast receiver connected to a display apparatus for displaying images corresponding to a broadcasting signal, the broadcast receiver receiving a broadcasting signal, the broadcast receiver comprising:
first station tuning means for selecting a channel designated by the display apparatus from received broadcasting signals;
second station tuning means for sequentially and repetitively selecting a plurality of channels from the received broadcasting signals; and
communication means for communicating with the display apparatus, and transmitting video information of a channel selected by the first station tuning means and/or image information of a channel selected by the second station tuning means, to the display apparatus via the transmission line.

10. A display apparatus for displaying images corresponding to a broadcasting signal, the display apparatus being connected via a transmission line to a broadcast receiver for selecting video information of a designated channel from broadcasting signals received by first station tuning means, sequentially and repetitively selecting a plurality of channels from broadcasting signals received by second station tuning means, generating image information of an image list partitioned into channels from image information of each channel, and transmitting video information of a channel selected by the first station tuning means and/or the image information of the image list generated from the image information of each channel selected by the second station tuning means, via the transmission line, the display apparatus comprising:
communication means for communicating with the broadcast receiver and receiving the video information and the image information from the broadcast receiver via the transmission line;
display means for displaying the video information selected by the first station tuning means and received by the communication means; and
input means for accepting an input of a change-over instruction of a channel,
wherein if a channel is to be changed over the display means displays the image list partitioned into channels received by the communication means, and transmits information indicating a change-over instruction to a channel selected from the image list by the input means to the broadcast receiver.

11. A display apparatus for displaying images corresponding to a broadcasting signal, the display apparatus being connected via a transmission line to a broadcast receiver for making first station tuning means select a designated channel from broadcasting signals, making second station tuning means sequentially and repetitively select a plurality of channels from broadcasting signals received by second station tuning means, and transmitting video information of a channel selected by the first station tuning means and/or image information of a channel selected by the second station tuning means via the transmission line, the display apparatus comprising:
communication means for communicating with the broadcast receiver and receiving the video information and the image information from the broadcast receiver via the transmission line;
display means for displaying the video information selected by the first station tuning means and received by the communication means;
image list generation means for generating and updating image information of an image list partitioned into channels, in accordance with the image information of each channel selected by the second station tuning means and received by the communication means; and
input means for accepting an input of a change-over instruction of a channel,
wherein, if a channel is to be changed over, the display means displays the image list partitioned into channels in accordance with the image information generated by the image list generation means, and transmits information indicating a change-over instruction to a channel selected from the image list by the input means to the broadcast receiver.

12. The display apparatus according to claim 11, wherein:
the image list is updated each time the second station tuning means select a new channel.

13. The display apparatus according to claim 11, wherein:
the display means displays the image list partitioned into channels corresponding to image information generated by the image list generation means, together with channel information.

14. A broadcast reception method for a broadcast reception system in which a broadcast receiver for receiving a broadcasting signal and a display apparatus for displaying images corresponding to the broadcasting signal are interconnected via a transmission line, the method comprising:
in the broadcast receiver,
selecting video information of a channel designated through communications with the display apparatus from broadcasting signals received by first station tuning means;
selecting sequentially and repetitively a plurality of channels from broadcasting signals received by second station tuning means;
generating an image list partitioned into channels, in accordance with image information of each channel; and
transmitting the video information of a channel selected by the first station tuning means and/or image information of the image list generated from image information of each channel selected by the second station tuning means, to the display apparatus via the transmission line;
in the display apparatus,
receiving the video information of a channel designated through communications with the broadcast receiver via the transmission line;
displaying an image corresponding to the received video information of the designated channel;
displaying, if a channel is to be changed over, the image list partitioned into channels generated from the image information corresponding to each channel and received via the transmission line; and
transmitting information indicating a change-over instruction to a channel selected from the image list to the broadcast receiver via the transmission line, to change over a channel to be received by the first station tuning means.

15. A broadcast reception method for a broadcast reception system in which a broadcast receiver for receiving a broadcasting signal and a display apparatus for displaying images corresponding to the broadcasting signal are interconnected via a transmission line, the method comprising:
in the broadcast receiver,
selecting a channel designated through communications with the display apparatus from received broadcasting signals by first station tuning means;
selecting sequentially and repetitively a plurality of channels from received broadcasting signals by second station tuning means; and
transmitting video information of a channel selected by the first station tuning means and/or image information of a channel selected by the second station tuning means, to the display apparatus via the transmission line;
in the display apparatus,
communicating via the transmission line with the broadcast receiver, receiving the video information from the broadcast receiver via the transmission line;
displaying an image corresponding to the received video information of a channel selected by the first station tuning means;
generating and updating the image information of an image list partitioned into channels in accordance with the received image information of each channel selected by the second station tuning means;
displaying, if a channel is to be changed over, the image list partitioned into channels generated from the image information of each channel; and
transmitting information indicating a change-over instruction to a channel selected from the image list to the broadcast receiver via the transmission line, to change over a channel to be received by the first station tuning means.

16. A broadcast reception system in which a broadcast receiver for receiving a broadcasting signal and a display apparatus for displaying images corresponding to the broadcasting signal are interconnected via a transmission line, wherein:
the broadcast receiver comprises:
a first tuner unit adapted to select a channel designated by the display apparatus from received broadcasting signals;
a second tuner unit adapted to sequentially and repetitively select a plurality of channels from the received broadcasting signals;
an image list generation unit adapted to generate and update image information of an image list partitioned into channels, in accordance with image information of each channel selected by the second tuner unit; and
a communication unit adapted to communicate with the display apparatus, and transmitting the video information of a channel selected by the first tuner unit and/or image information of the image list generated by the image list generation unit, to the display apparatus via the transmission line; and
the display apparatus comprises:
a communication unit adapted to communicate with the broadcast receiver and receive the video information and/or the image information from the broadcast receiver via the transmission line;
a display unit adapted to display the video information selected by the first tuner unit and received by the communication unit; and
an input unit adapted to accept an input of a change-over instruction of a channel,
wherein, if a channel is to be changed over, the display unit displays the image list partitioned into channels generated by the image list generation unit and received by the communication unit, and transmits information indicating a change-over instruction to a channel selected from the image list by the input unit to the broadcast receiver, to change over a channel to be received by the first tuner unit.
